# EUROPEAN PATENT SPECIFICATION

(11) **EP 0 431 703 B1**
(45) Date of publication and mention of the grant of the patent: **05.03.1997**
(21) Application number: 90203192.1
(22) Date of filing: 04.12.1990
(51) Int. Cl.: A23B 7/022, A23B 7/08, A23G 9/02

(54) **Treatment of fruits**
Behandlung von Früchten
Traitement de fruits

(30) Priority: 05.12.1989 GB 8927434
(43) Date of publication of application: 12.06.1991
(73) Proprietor: UNILEVER N.V., 3013 AL Rotterdam (NL); UNILEVER PLC, London EC4P 4BQ (GB)
(72) Inventor: Boutang, Jérôme Jean-M., F-75015 Paris (FR); Richards, Jeffrey Bryn, Sharnbrook, Bedford MK 44 1LQ (GB)
(74) Representative: Kirsch, Susan Edith

(56) References cited:
- EP-A- 0 337 249
- EP-A- 0 337 621
- WO-A-85/03413
- WO-A-86/01686
- DE-A- 1 492 647
- FR-A- 2 638 062
- US-A- 4 713 252

## Description

The invention relates to a method of treating fruit material for rendering it suitable for incorporating in for instance desserts and confectionery products, in particular frozen confection such as ice confection.

Many processes are known for candying fruits in an attempt to make fruit or fuit pieces suitable for incorporation into food products such as desserts and confectionery. However, in practice the fruit so treated becomes chewy and looses a considerable portion of the natural flavour.

An object of the invention is to provide a method for treating fruit material so as to render it suitable for incorporation into desserts and confectionery products, in particular if these desserts and confectionery products are stored in a frozen condition, particularly ice confection, without changing the eating impression thereof such as structure, taste and flavour, both in an unfrozen, frozen and thawed out condition.

To that end the invention provides a method for treating fruit material, either whole, diced or sliced, comprising air drying the material at material temperatures not exceeding 50 °C, thereby removing from 20 to 60% and preferably 20 - 45% of its initial weight and thereafter soaking in an aqueous medium containing one or more sugars, whereby some more water may be removed. In a preferred embodiment of the invention the fruit material is therafter frozen.

The products obtained by this method are suitable for incorporation in ice cream.

If necessary the air drying step may be accelerated by radiative heating, such as microwave heating or infra red heating, however, while taking care that the material temperature is not increased to exceed 50°C and preferably not to exceed 40^{C.}

The amount of sweetness may be controlled by selecting suitable sugars for the soaking step, e.g. sucrose, fructose, glucose, corn syrup or any combination thereof; mono saccharides being preferred for manufacturing soft eating frozen fruit products. For that purpose additional freezing point depressants may be added as well such as glycerol, sorbitol or xylitol. Suitable total solids concentrations for this solution being in practice from 40 to 60% by weight of solute.

When doing so a product having a natural flavour and structure is obtained, although its texture is slightly more tough when compared with fresh products.

### Literature:

US 4713252 (Ismail) describes the preparation of fruit which has been collapsed to give a wrinkly, solid and chewy material. After sugar treatment the fruit is dried in a vacuum atmosphere which is suddenly released to collapse the fruit.

EPA 0337621 (NZDSIR) describes stabilising some sensory features of fruit by drying to a low moisture content. The stabilisation is provided by infusing with low molecular weight carbohydrate, eg sugar, and then drying.

US 4775545 (Staley) describes the preparation of dry sweetened fruit with low water activity. This is achieved by drying the fruit and then bathing it in an aqueous solution containing a high proportion of fructose.

The invention will be explained in the following examples.

### Example I

1 Kg of fresh strawberries are cut into halves or quarters, dependent on the size, and put on gauze trays and dried in a circulating air cabinet of 30-35°C air temperature for effecting a weight reduction of 0.45 kg. Thereafter the strawberries are dropped into 2 kg of an aqueous solution of 1040 g fructose, 160 g glycerol and 800 g water. After 12-16 hrs at +5 °C the fruits were removed from the solution, freed from adhering moisture, pasteurized and frozen; resulting in 0.4 kg final product.

The product obtained was gently mixed into 4 litre of fresh prepared ice cream which thereafter was hardened as normally to below -20 °C. After four hours the ice cream product was tested, as well as after 14 days. No appreciable changes could be noticed after storage.

The frozen strawberries are thawed out and used in a fruit salad having a good taste and flavour almost similar to fresh strawberries.

### Example II

1 Kg of fresh kiwi fruits were washed, peeled, and sliced before putting on gauze trays in a circulating air cabinet, air temperature 30-35°C, to effect a weight reduction of 0.20 - 0.25 kg. Thereafter, the partially dried kiwi fruit slices (0.75 - 0.80) kg were soaked in 3 kg aqueous solution of the following composition:
1.8 kg fructose,
1.2 kg water.
After 4-6 hrs at 5°C, the kiwi fruit slices were removed from the solution, freed from adhering moisture, resulting in 0.65 - 0.70 kg final product, and frozen.

The treated kiwi slices after freezing and thawing had the following properties:
- Texture:: soft-eating, similar to fresh kiwi, without the extreme wetness which is normally associated with frozen/thawed kiwi.
- Flavour:: relatively sweet and strongly kiwi-flavoured, and without the strong acid taste normally associated with frozen/thawed kiwi.

The frozen, treated kiwi slices were combined with other frozen fruit pieces to produce a frozen fruit salad mixture. After thawing the kiwi slices did not show the extreme wetness and flavour distortion normally associated with frozen and thawed kiwi.

It does not need explanation that the fruit without the freezing step can directly be used in fruit salads and fruit cakes etcetera.

## Claims

1. A method for treating fruit material comprising air drying said material at temperatures not exceeding 50°C, removing water to 20 to 45% of its initial weight and exposing the air dried material to an aqueous medium containing one or more sugars to remove water up to 60% of its initial weight.

2. A method according to claim 1, wherein the fruit material temperature does not exceed 40°C.

3. A method according to claims 1 or 2, wherein the aqueous medium has a total dissolved solids content of from 40 to 60% be weight of solute.

4. A method according to claims 1-3, wherein the aqueous medium contains monosaccharides.

5. A method according to claims 1-3, wherein the aqueous medium contains sucrose, fructose, glucose, corn syrup or any combination thereof.

6. A method according to claims 1-5, wherein the dried fruit material is subsequently frozen.

7. A method according to claims 1-6, wherein the aqueous medium additionally comprises a freezing point depressant.

8. A method according to claim 7, characterized in that the freezing point depressant is selected from the group consisting of glycerol, sorbitol, xylitol and mixtures thereof.

9. Fruit material obtained by the method of any preceding claim.

10. Frozen dessert, in particular ice confection, comprising fruit material according to claim 9.

## Patentansprüche

1. Verfahren zur Behandlung von Fruchtmaterial, welches umfaßt: Lufttrocknen des Materials bei 50°C nicht überschreitenden Temperaturen, Entfernen von Wasser auf 20 bis 45 % seiner Ausgangsmasse, und Aussetzen des luftgetrockneten Materials an ein wässeriges Medium, das einen oder mehrere Zucker enthält, um Wasser auf bis zu 60 % seiner Ausgangsmasse zu entfernen.

2. Verfahren nach Anspruch 1, bei welchem die Fruchtmaterial-Temperatur 40°C nicht überschreitet.

3. Verfahren nach Anspruch 1 oder 2, bei welchem das wässerige Medium einen gesamten Gehalt an gelösten Feststoffen von 40 bis 60 %, bezogen auf die Masse der gelösten Stoffe, aufweist.

4. Verfahren nach einem der Ansprüche 1 bis 3, bei welchem das wässerige Medium Monosaccharide enthält.

5. Verfahren nach einem der Ansprüche 1 bis 3, bei welchem das wässerige Medium Saccharose, Fructose, Glucose, Maissirup oder irgendeine Kombination hievon enthält.

6. Verfahren nach einem der Ansprüche 1 bis 5, bei welchem das getrocknete Fruchtmaterial anschließend eingefroren wird.

7. Verfahren nach einem der Ansprüche 1 bis 6, bei welchem das wässerige Medium zusätzlich ein Gefrierschutzmittel enthält.

8. Verfahren nach Anspruch 7, dadurch gekennzeichnet, daß das Gefrierschutzmittel ausgewählt wird aus der Gruppe bestehend aus Glycerin, Sorbit, Xylit und Mischungen hievon.

9. Fruchtmaterial, welches durch das Verfahren eines der vorhergehenden Ansprüche erhalten wird.

10. Gefrorenes Dessert, insbesondere Eiskonfekt, welches Fruchtmaterial nach Anspruch 9 umfaßt.

## Revendications

1. Procédé de traitement de fruits comprenant le séchage à l'air desdits fruits à des températures n'excédant pas 50°C, l'enlèvement de l'eau jusqu'à 20 à 45% du poids initial et l'exposition des fruits séchés à l'air à un milieu aqueux contenant un ou plusieurs sucres pour enlever l'eau jusqu'à 60% du poids initial.

2. Procédé selon la revendication 1, dans lequel la température des fruits n'excède pas 40°C.

3. Procédé selon la revendication 1 ou 2, dans lequel le milieu aqueux a une teneur total en solides dissous de 40 à 60% en poids de soluté.

4. Procédé selon les revendications 1 à 3, dans lequel le milieu aqueux contient des monosaccharides.

5. Procédé selon les revendications 1 à 3, dans lequel le milieu aqueux contient du saccharose, du fructose, du glucose, du sirop de maïs ou leur mélange.

6. Procédé selon les revendications 1 à 5, dans lequel les fruits séchés sont ensuite surgelés.

7. Procédé selon les revendications 1 à 6, dans lequel le milieu aqueux comprend en plus un agent d'abaissement du point de surgélation.

8. Procédé selon la revendication 7, caractérisé en ce que l'agent d'abaissement du point de surgélation est choisi parmi le glycérol, le sorbitol, le xylitol et leurs mélanges.

9. Fruits qu'on obtient par le procédé de l'une quelconque des revendications précédentes.

10. Dessert surgelé, en particulier confiserie glacée, comprenant les fruits selon la revendication 9.
